# EUROPÄISCHE PATENTSCHRIFT

(11) **EP 1 167 719 B1**
(45) Veröffentlichungstag und Bekanntmachung des Hinweises auf die Patenterteilung: **01.12.2004**
(21) Anmeldenummer: 01890137.1
(22) Anmeldetag: 10.05.2001
(51) Int. Cl.: F02B 31/08, F02D 9/14

(54) **Brennkraftmaschine mit zumindest zwei Einlasskanälen pro Zylinder**
Combustion engine with at least two intake channels per cylinder
Moteur à combustion avec au moins deux canaux d'admission par cylindre

(30) Priorität: 28.06.2000 AT 4762000 U
(43) Veröffentlichungstag der Anmeldung: 02.01.2002
(73) Patentinhaber: AVL List GmbH, 8020 Graz (AT)
(72) Erfinder: Kapus, Paul, Dr., 8111 Judendorf (AT)
(74) Vertreter: Babeluk, Michael, Dipl.-Ing.

(56) Entgegenhaltungen:
- EP-B- 0 764 773
- AT-U- 2 434
- AT-U- 3 138
- DE-A- 4 017 066
- US-A- 4 313 410
- US-A- 5 803 045
- PATENT ABSTRACTS OF JAPAN vol. 018, no. 465 (M-1665), 30. August 1994 (1994-08-30) -& JP 06 146935 A (AISAN IND CO LTD), 27. Mai 1994 (1994-05-27)
- PATENT ABSTRACTS OF JAPAN vol. 009, no. 100 (M-376), 2. Mai 1985 (1985-05-02) -& JP 59 224466 A (TOYOTA MOTOR CORP), 17. Dezember 1984 (1984-12-17)
- PATENT ABSTRACTS OF JAPAN vol. 018, no. 413 (M-1649), 3. August 1994 (1994-08-03) -& JP 06 123233 A (SUZUKI MOTOR CORP), 6. Mai 1994 (1994-05-06)

## Beschreibung

Die Erfindung betrifft eine Brennkraftmaschine mit zumindest einem als Füllkanal ausgebildeten ersten Einlasskanal und zumindest einem zweiten Einlasskanal pro Zylinder.

Aus der JP 06-146935 ist eine Durchflusssteuereinrichtung für einen Einlasskanal einer Brennkraftmaschine bekannt. Der Einlasskanal weist dabei eine durch einen Einbauteil gebildete Trennwand auf und ist dadurch in einen Hauptkanal und einen Nebenkanal geteilt. Stromaufwärts der Trennwand ist ein Flachschieber quer zum Einlasskanal angeordnet, über welchen wahlweise der Hauptkanal oder der Nebenkanal geöffnet oder beide geschlossen werden können, wobei neben Endstellungen auch Zwischenstellungen des Flachschiebers erforderlich sind.

Aus der AT 402 535 B ist eine Brennkraftmaschine mit zwei Einlassventilen je Motorzylinder bekannt. Um bei Teillast einen starken Drall der Ladung im Brennraum, ohne jedoch die Ladungseinströmung bei Volllast infolge schlechterer Durchflusswerte zu beeinträchtigen zu erreichen, schließen die Hauptströmungsrichtungen der über die beiden äußeren Einlassventile in den Brennraum eingesaugten Teilströme mit der durch die Motorzylinderachsen einer Zylinderreihe bestimmten Ebene einen spitzen Winkel ein, welcher beim Teilstrom eines Ansaugeventiles gering, beim Teilstrom des zweiten Ansaugventiles jedoch um 10 bis 40° größer ist.

Die EP 0 764 773 B1 beschreibt eine Viertakt-Brennkraftmaschine mit dachförmigen Brennraum und mit mindestens zwei Einlassventilen und mindestens zwei Einlasskanälen pro Zylinder, von welchen ein erster Einlasskanal ungedrosselt ausgeführt ist und ein zweiter Einlasskanal eine Drosseleinrichtung aufweist. Um eine stabile radiale Gemischschichtung zu erzielen, mündet das Kraftstoffeinspritzventil in den gedrosselten zweiten Einlasskanal, wobei die Drosseleinrichtung im geschlossenen Zustand einen definierten Mindestdurchfluss erzeugt.

Die AT 003 138 U1 beschreibt eine Viertakt-Brennkraftmaschine mit zwei zu Einlassventilen führenden Einlasskanälen pro Zylinder, von welchen ein ersten Einlasskanal als ungedrosselter Tangentialkanal ausgeführt ist und ein zweiter Einlasskanal eine in Abhängigkeit von der Motorlast betätigbare Drosseleinrichtung aufweist und als Neutralkanal ausgeführt ist. Ein Kraftstoff in beide Einlasskanäle einspritzendes Einspritzventil ist so angeordnet, dass zumindest zwei Kraftstoffstrahlen des Einspritzventiles durch eine definierte Öffnung in der Kanaltrennwand zwischen den beiden Einlasskanälen hindurch auf Einlassöffnungen in den Brennraum gerichtet sind. Im geschlossenen Zustand der Drosseleinrichtung ist ein definierter Mindestdurchfluss durch den zweiten Einlasskanal erzeugbar, wobei die Drosseleinrichtung stromaufwärts der definierten Öffnung im zweiten Einlasskanal angeordnet ist. Zur Reduzierung der Kohlenwasserstoffemissionen ist im Bereich der Kanaltrennwand zwischen den beiden Einlasskanälen zwischen der Drosseleinrichtung und der definierten Öffnung ein durch Strömungsleitflächen definierter Leckageströmungsweg für den Mindestdurchfluss vorgesehen.

Um eine Drallströmung im Brennraum erzeugen zu können, ist bei den bekannten Brennkraftmaschinen zumindest einer der beiden Einlasskanäle drallerzeugend und der andere als Füllkanal ausgebildet. Allerdings wird durch den Drallkanal die maximale Füllung an der Volllast nachteilig beeinflusst.

Es ist die Aufgabe der Erfindung, diesen Nachteil zu vermeiden und eine Brennkraftmaschine der eingangs genannten Art, die die Füllung des Zylinderraumes insbesondere an der Volllast verbessert.

Erfindungsgemäß erfolgt dies dadurch, dass auch der zweite Einlasskanal als Füllungskanal ausgebildet ist und zumindest ein Einlasskanal, vorzugsweise der zweite Einlasskanal einen Hauptkanal und einen Nebenkanal aufweist, welche durch eine Kanalzwischenwand voneinander getrennt sind, wobei der Nebenkanal vom Hauptkanal abzweigt und wieder in diesen einmündet, und dass quer zum zweiten Einlasskanal ein Flachschieber angeordnet ist, welcher in einer ersten Stellung den Durchfluss durch den Nebenkanal freigibt und in einer zweiten Stellung den Durchfluss durch den Nebenkanal zumindest drosselt und den Durchfluss durch den Hauptkanal ermöglicht. Dadurch, dass beide Einlasskanäle als Füllungskanäle ausgebildet sind, kann die Füllung an der Volllast wesentlich erhöht werden. Um eine Beeinflussung der Strömung insbesondere bei Volllast durch Einbauten wie beispielsweise Blechzwischenwände auszuschließen, ist vorgesehen, dass die Kanalzwischenwand einstückig mit dem Zylinderkopf ausgeführt ist.

Gleichzeitig ermöglicht der Flachschieber eine einfache Steuerung des Einlassdralles. Dies ist insbesondere dann auf einfache Weise möglich, wenn der Nebenkanal zwischen Hauptkanal und Zylinderkopfebene im Zylinderkopf angeordnet ist. Dazu ist vorgesehen, dass der Nebenkanal so drall- und/oder tumbleerzeugend ausgebildet ist, dass er in der ersten Stellung des Flachschiebers einen Drall und/oder Tumble im Zylinderraum erzeugt, wobei es besonders günstig ist, wenn der Nebenkanal als eine Tangentialströmung im Zylinderraum erzeugender Kanal, vorzugsweise als Tangentialkanal ausgebildet ist.

Unter Drall wird allgemein eine Strömung um die Zylinderachse verstanden. Als Tumble wird eine Walzenströmung bezeichnet, deren Drehachse bezüglich der Zylinderachse insbesondere unter einem Winkel von etwa 90° geneigt ist.

Durch Umschalten des Flachschiebers kann somit zwischen Drallströmung mit geringer Zylinderfüllung und drallloser Strömung mit hoher Zylinderfüllung variiert werden.

In einer besonders bevorzugten Ausführungsvariante ist vorgesehen, dass der Flachschieber auch quer zum zweiten Einlasskanal angeordnet ist und der Durchflussquerschnitt des zweiten Einlasskanales durch den Flachschieber gleichzeitig mit dem Durchfluss und dem Drall des ersten Einlasskanales steuerbar ist. In Weiterbildung dieser Ausführung ist es möglich, dass erster und zweiter Einlasskanal als tumbleerzeugende Kanäle ausgebildet ist, und dass durch gleichzeitiges Schalten der beiden Einlasskanäle durch den Flachschieber die Tumble-Strömung variierbar ist. Auf diese Weise kann durch die beiden Einlasskanäle eine variierbare Tumble-Strömung im Zylinderraum erzeugt werden. Der Flachschieber kann dabei in der ersten Stellung den Durchfluss durch den ersten Einlasskanal zumindest drosseln oder sperren.

In weiterer Ausführung der Erfindung kann vorgesehen sein, dass auch der erste Einlasskanal einen Hauptkanal und einen Nebenkanal aufweist, welche durch eine Kanalzwischenwand voneinander getrennt sind, wobei der Nebenkanal vom Hauptkanal abzweigt und wieder in diesen einmündet. In diesem Falle ist es besonders vorteilhaft, wenn der Flachschieber in seiner ersten Stellung den Durchfluss durch den Nebenkanal des ersten Einlasskanales freigibt und in seiner zweiten Stellung den Durchfluss durch den Nebenkanal zumindest drosselt und den Durchfluss durch den Hauptkanal ermöglicht. Somit kann der Drall im Zylinderraum durch Veränderung der Durchflussquerschnitte der beiden Einlasskanäle gesteuert werden. Um eine effektive Beeinflussung des Dralles zu erreichen, ist es zweckmäßig, wenn der Flachschieber in der ersten Stellung den Durchfluss durch den Hauptkanal zumindest drosselt.

In weiterer Ausbildung der Erfindung kann vorgesehen sein, dass der Flachschieber in einer dritten Stellung den Durchfluss durch den Nebenkanal zumindest drosselt. In diesem Falle ist es vorteilhaft, wenn der Flachschieber in einer dritten Stellung den Durchfluss durch den Hauptkanal ermöglicht. Gleichzeitig kann vorgesehen sein, dass der Flachschieber in der dritten Stellung den Durchfluss durch den ersten Einlasskanal zumindest drosselt.

Im Rahmen der Erfindung kann auch vorgesehen sein, dass der Flachschieber in jeder Stellung den Durchfluss durch den Hauptkanal ermöglicht. In diesem Falle wird der Drall und/oder der Tumble nur durch Veränderung der Strömungsquerschnitte des oder der Nebenkanäle gesteuert, wobei der Durchfluss durch den oder die Hauptkanäle unverändert bleibt.

Der Flachschieber wird entweder parallel oder tangential bezüglich der Kurbelwelle verschoben. Insbesondere kann auch vorgesehen sein, dass der Flachschieber parallel zur Zylinderachse verschiebbar ist.

Die erfindungsgemäße Kanalgestaltung eignet sich insbesondere für Brennkraftmaschinen mit indirekter Einspritzung, wobei es besonders vorteilhaft ist, wenn in zumindest einen Einlasskanal, vorzugsweise sowohl in den ersten, als auch in den zweiten Einlasskanal, eine Einspritzeinrichtung einmündet, wobei vorzugsweise die Einmündung stromabwärts der Einmündung des Nebenkanales in den Hauptkanal angeordnet ist. Insbesondere bei indirekter Kraftstoffeinspritzung in den zweiten Einlasskanal ist es vorteilhaft, wenn der Flachschieber zumindest eine Leckageöffnung aufweist, um im geschlossenen Hauptkanal und/oder im geschlossenen Nebenkanal eine vordefinierte Leckageströmung zu ermöglichen. Dadurch wird im jeweils geschlossenen Teil des Einlasskanales eine Leckageströmung ermöglicht, welche die Ladungseinbringung in den Zylinderraum begünstigt und einer Benetzung der Kanalwände mit dem eingespritzten Kraftstoff entgegenwirkt.

Die Erfindung wird im Folgenden anhand der Figuren näher erläutert. Es zeigen schematisch
- Fig. 1: einen Schnitt durch einen zweiten Einlasskanal einer Brennkraftmaschine in einer ersten erfindungsgemäßen Ausführung mit einem eine erste Stellung einnehmenden Flachschieber,
- Fig. 2: einen analogen Schnitt zu Fig. 1 mit einer zweiten Stellung des Flachschiebers,
- Fig. 3: einen Schnitt durch die Einlasskanäle gemäß der Linie III - III in den Fig. 1 und 2,
- Fig. 4: einen Schnitt durch einen zweiten Einlasskanal einer Brennkraftmaschine in einer zweiten erfindungsgemäßen Ausführung mit einem eine erste Stellung einnehmenden Flachschieber,
- Fig. 5: einen analogen Schnitt zu Fig. 4 mit einer zweiten Stellung des Flachschiebers,
- Fig. 6: einen Schnitt durch die Einlasskanäle gemäß der Linie VI - VI in den Fig. 4 und 5,
- Fig. 7: einen Schnitt durch einen zweiten Einlasskanal einer Brennkraftmaschine in einer dritten erfindungsgemäßen Ausführung mit einem eine erste Stellung einnehmenden Flachschieber,
- Fig. 8: einen analogen Schnitt zu Fig. 7 mit einer zweiten Stellung des Flachschiebers,
- Fig. 9: einen Schnitt durch die Einlasskanäle gemäß der Linie IX - IX in den Fig. 7 und 8,
- Fig. 10: einen Schnitt durch einen zweiten Einlasskanal einer Brennkraftmaschine in einer vierten erfindungsgemäßen Ausführung mit einem eine erste Stellung einnehmenden Flachschieber,
- Fig. 11: einen analogen Schnitt zu Fig. 10 mit einer zweiten Stellung des Flachschiebers,
- Fig. 12: einen Schnitt durch die Einlasskanäle gemäß der Linie XII - XII in den Fig. 10 und 11,
- Fig. 13: einen Schnitt durch einen zweiten Einlasskanal einer Brennkraftmaschine in einer fünften erfindungsgemäßen Ausführung mit einem eine erste Stellung einnehmenden Flachschieber,
- Fig. 14: einen analogen Schnitt zu Fig. 13 mit einer zweiten Stellung des Flachschiebers,
- Fig. 15: einen Schnitt durch die Einlasskanäle gemäß der Linie XV - XV in den Fig. 13 und 14,
- Fig. 16: einen Schnitt durch einen zweiten Einlasskanal einer Brennkraftmaschine in einer sechsten erfindungsgemäßen Ausführung mit einem eine erste Stellung einnehmenden Flachschieber,
- Fig. 17: einen analogen Schnitt zu Fig. 16 mit einer zweiten Stellung des Flachschiebers,
- Fig. 18: einen Schnitt durch die Einlasskanäle gemäß der Linie XVIII - XVIII in den Fig. 16 und 17,
- Fig. 19: eine Draufsicht auf einen Zylinder mit einem Tangentialkanal und
- Fig. 20: eine Draufsicht auf einen Zylinder mit einem eine Tangentialströmung im Zylinderraum erzeugenden Nebenkanal.

Funktionsgleiche Bauteile sind in den Ausführungsvarianten mit gleichen Bezugszeichen versehen.

Die in den Figuren schematisch dargestellte Brennkraftmaschine weist pro Zylinder 1 einen ersten Einlasskanal 2 und einen zweiten Einlasskanal 3 auf, wobei beide Einlasskanäle 2, 3 als Füllungskanäle ausgebildet sind und jeweils über ein Einlassventil 4 in den Zylinderraum 5 einmünden, welcher durch den hin- und hergehenden Kolben 6 begrenzt wird. Zumindest der zweite Einlasskanal 3, in einigen Ausführungsvarianten auch der erste Einlasskanal 2, weist einen Hauptkanal 7, 7' auf, welcher durch einen Nebenkanal 8, 8' umgehbar ist. Der Hauptkanal 7, 7' und der Nebenkanal 8, 8' sind durch eine mitgegossene Kanalwand 9, 9' voneinander getrennt. Der Hauptkanal 7, 7' ist dabei so ausgeführt, dass eine geringst mögliche Strömungsbeeinflussung durch die Kanalzwischenwand 9, 9' und den Nebenkanal 8, 8' entsteht. Der Nebenkanal 8, 8' ist zwischen Hauptkanal 7, 7' und einer Zylinderkopfebene 10, also unterhalb des Hauptkanales 7, 7' angeordnet und auf die in den Zylinderraum 5 mündende Einlassöffnung 11 gerichtet.

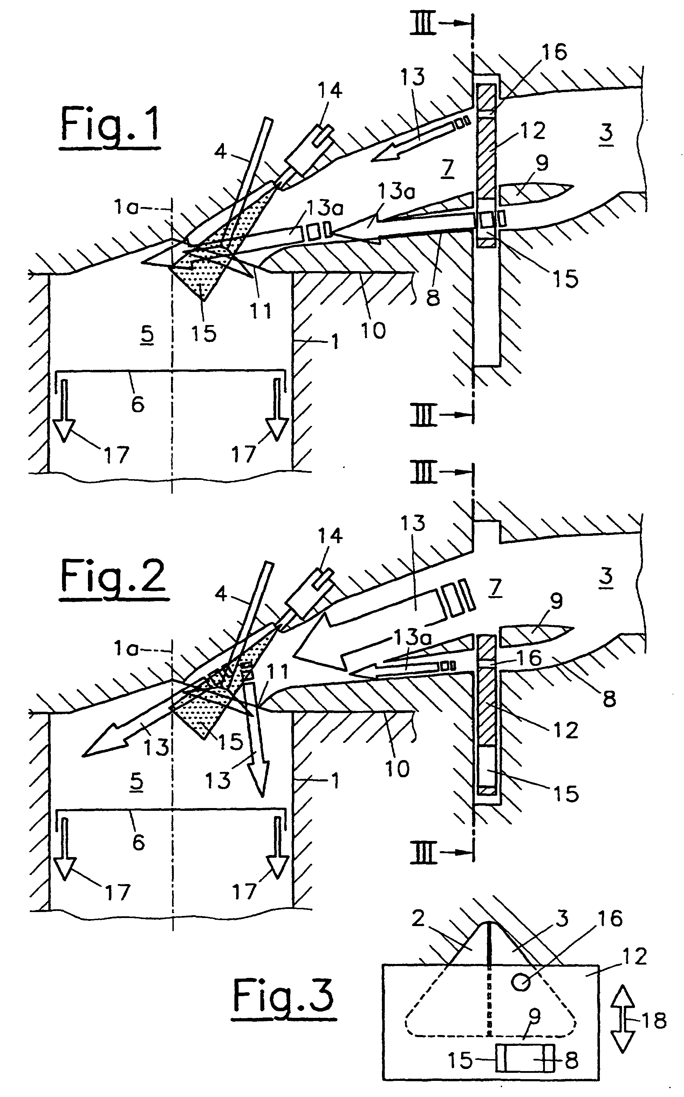

Zur Steuerung der Strömung durch den Hauptkanal 7 und den Nebenkanal 8 ist quer zum zweiten Einlasskanal 3 ein Flachschieber 12 so angeordnet, dass in einer ersten Stellung des Flachschiebers 12 der Nebenkanal 8 geöffnet ist, und in einer zweiten Stellung der Hauptkanal 7 geöffnet und der Nebenkanal 8 geschlossen oder gedrosselt ist. Auf diese Weise kann zwischen einer dralllosen Einlassströmung durch den Hauptkanal 7 mit maximalem Durchfluss bei Volllast und einer drallbehafteten Einlassströmung durch den Nebenkanal 8 mit geringerem Durchsatz umgeschaltet werden. Der Nebenkanal 8 ist dabei als kleiner Tangentialkanal - also als Tangentialnebenkanal - ausgeführt und bewirkt eine Tangentialströmung im Zylinderraum 5, wie in den Fig. 1, 4, 7, 10, 13 und 16 jeweils durch die Pfeile 13a angedeutet ist. Die neutrale Strömung bei Volllast bei geschlossenem oder gedrosseltem Nebenkanal 8 ist in den Fig. 2, 5, 8, 11, 14 und 17 durch die Pfeile 13 angedeutet.

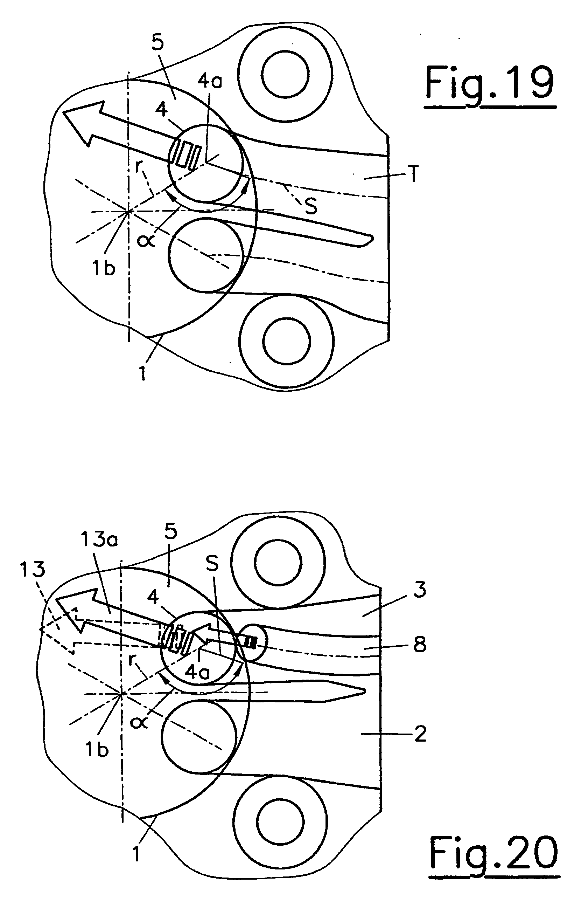

Als Tangentialkanal ist hier ein Kanal T zu verstehen, dessen Strömungsmittellinie s mit einer Zylindermittelpunkt 1b und Ventilmittelpunkt 4a verbindenden Geraden r einen Winkel α zwischen 80° und 120° aufspannt, wie in Fig. 19 angedeutet ist.

Mit Tangentialnebenkanal wird hier ein Nebenkanal 8 bezeichnet, welcher eine einem Tangentialkanal T äquivalente Strömung im Zylinderraum 5 erzeugt. Dabei entspricht der Winkel α zwischen 80° und 120° dem Winkel zwischen der Mittellinie eines gedachten äquivalenten (die gleiche Strömung hervorrufenden) Tangentialkanals und der Verbindungslinie r des Ventilmittelpunktes 4a und des Zylindermittelpunktes 1b.

Gemäß den dargestellten Ausführungen kann weiters eine in beide Einlasskanäle 2, 3 mündende Einspritzeinrichtung 14 vorgesehen sein, deren Kraftstoffstrahl 15 auf die Einlassöffnung 11 gerichtet ist. Um den Transport des eingespritzten Kraftstoffes in den Zylinderraum 5 zu unterstützen, weist der Flachschieber 12 zusätzlich zur Steueröffnung 15 für den Nebenkanal 8 noch zumindest eine Leckageöffnung 16 auf, durch welche ein genau definierter Leckagestrom durch den jeweils geschlossenen Hauptkanal 7 oder Nebenkanal 8 ermöglicht wird.

Die Kolbenbewegung während der Öffnung des Einlassventiles 4 ist in den Figuren mit den Pfeilen 17 angedeutet. Der Pfeil 18 symbolisiert die Bewegungsrichtung des Flachschiebers 12 zur Steuerung der beiden Einlasskanäle 2 und 3.

In den Ausführungsbeispielen ist der Flachschieber 12 auch quer zum ersten Einlasskanal 2 angeordnet, so dass gleichzeitig mit dem zweiten Einlasskanal 3 auch der Durchfluss des ersten Einlasskanales 2 gesteuert werden kann. Auf diese Weise ist eine variable Drall- oder Tumble-Strömung im Zylinderraum 5 realisierbar.

Die Fig. 1 bis 3 zeigen ein erstes Ausführungsbeispiel, bei dem der Flachschieber 12 im Wesentlichen in Richtung der Zylinderachse 1a verschiebbar ist. In der in Fig. 1 gezeigten ersten Stellung des Flachschiebers 12 ist der Hauptkanal 7 gedrosselt und der Nebenkanal 8 geöffnet, in der in Fig. 2 dargestellten zweiten Stellung des Flachschiebers 12 ist es genau umgekehrt.

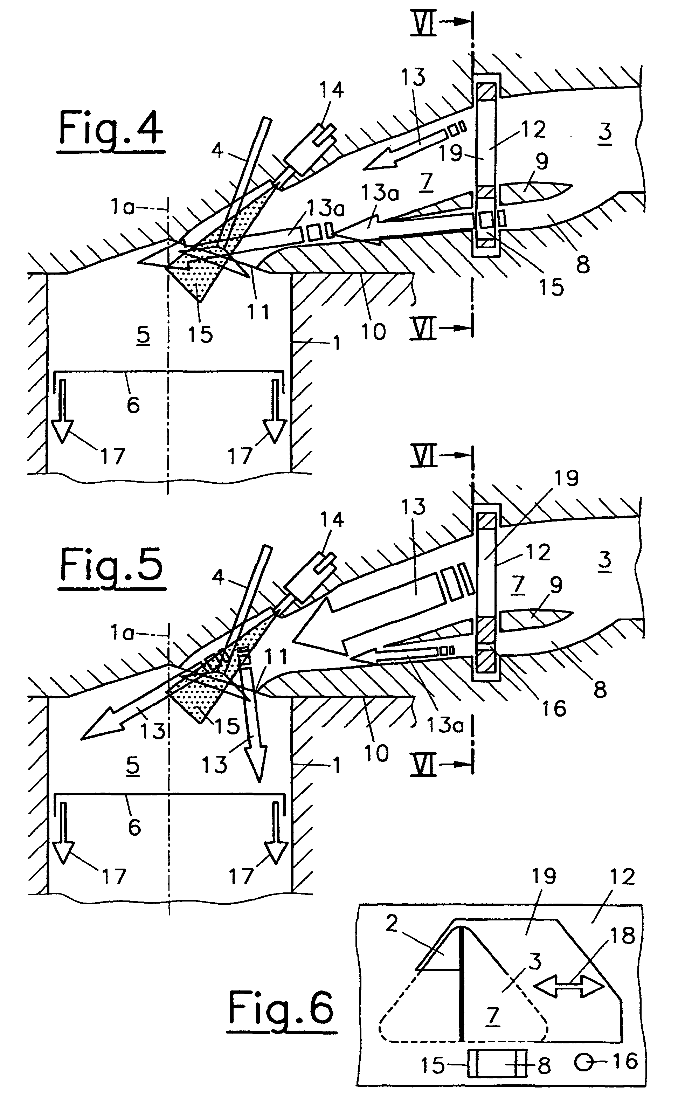

Die Fig. 4 bis 12 zeigen ein zweites, ein drittes und ein viertes Ausführungsbeispiel einer Brennkraftmaschine, bei der der Flachschieber 12 im Wesentlichen in Richtung einer nicht weiter dargestellten Kurbelwellenachse, also in Längsrichtung der Brennkraftmaschine, verschoben werden kann.

Beim zweiten Ausführungsbeispiel gemäß den Fig. 4 bis 6 weist der Flachschieber 12 ähnlich zum ersten Ausführungsbeispiel eine erste und eine zweite Stellung auf. In der in Fig. 4 dargestellten ersten Stellung ist der Nebenkanal 8 über die Steueröffnung 15 zur Gänze geöffnet. Der Flachschieber 12 weist auch eine zweite Steueröffnung 19 auf, welche sowohl in der ersten, als auch in der in Fig. 5 dargestellten zweiten Stellung des Flachschiebers 12 den Hauptkanal 7 zur Gänze freigibt. In der ersten Stellung wird durch den Flachschieber 12 der erste Einlasskanal 2 geschlossen oder zumindest gedrosselt, wie in Fig. 6 dargestellt ist. Durch den geöffneten Nebenkanal 8 entsteht eine Drallströmung im Zylinderraum 5.

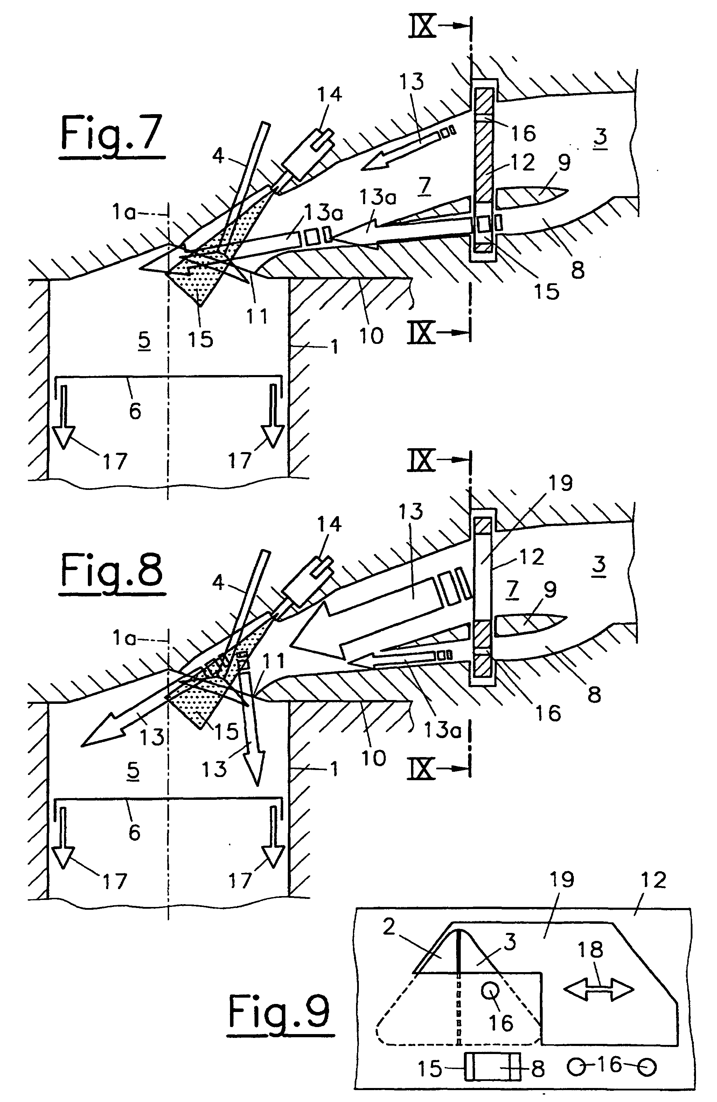

Bei der in den Fig. 7 bis 9 dargestellten dritten Ausführungsvariante der Erfindung weist der Flachschieber außer der in den Fig. 7 bzw. 8 dargestellten ersten bzw. zweiten Stellung noch eine dritte Stellung für den Volllastbereich auf, bei der sowohl der erste, als auch der zweite Einlasskanal 2, 3 zur Gänze geöffnet, der Nebenkanal 8 des zweiten Einlasskanales 3 allerdings verschlossen bzw. mittels der Leckageöffnung 16 stark gedrosselt ist. In Fig. 8 ist die zweite Stellung des Flachschiebers 12 dargestellt, bei der der Hauptkanal 7 des zweiten Einlasskanales 3 geöffnet und der Nebenkanal 8, sowie der erste Einlasskanal 2 gedrosselt oder geschlossen ist. Diese Stellung des Flachschiebers 12 wird in Motorbetriebsbereichen, beispielsweise im oberen Teillastbereich, eingenommen, bei denen mittlere Durchsätze mit Drall im Zylinderraum erwünscht sind. In den Fig. 7 und 9 ist die erste Stellung des Flachschiebers 12 dargestellt, in welcher der erste Einlasskanal 2, sowie der Hauptkanal 7 des zweiten Einlasskanales 3 gedrosselt oder geschlossen, der Nebenkanal 8 aber zur Gänze geöffnet ist. Dadurch entsteht eine stark drallbehaftete Strömung im Zylinderraum 5, was insbesondere im Teillastbereich erwünscht ist. Es ist auch möglich auf die mittlere Stellung zu verzichten, wodurch die Linke der beiden in Fig. 9 dargestellten Leckageöffnungen 16 entfallen würde.

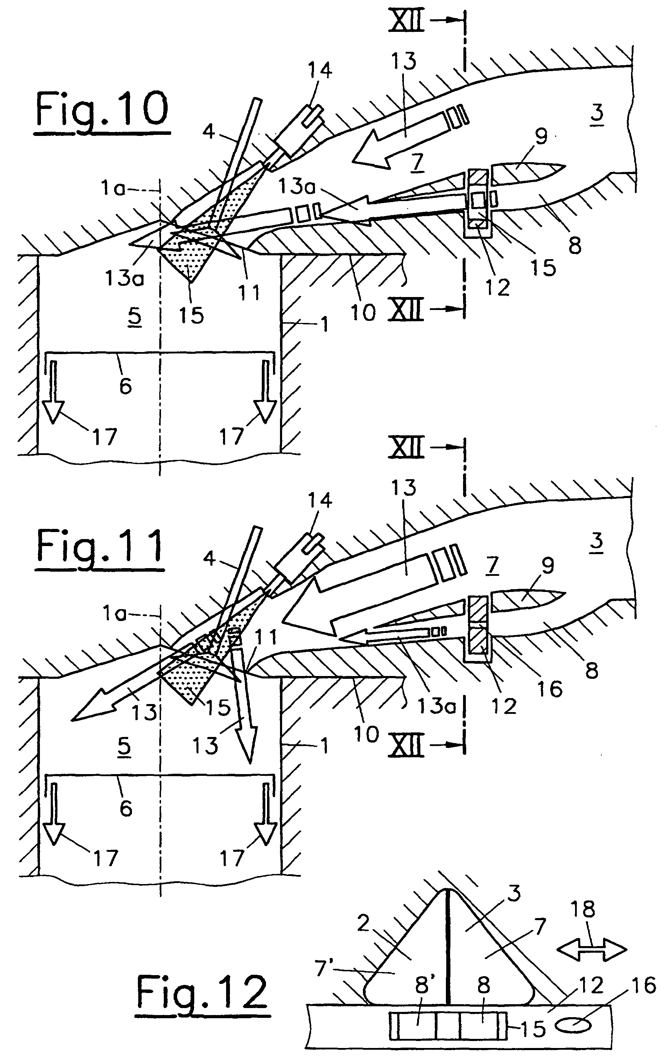

Die Fig. 10 bis 18 zeigen ein viertes, fünftes und sechstes Ausführungsbeispiel der Erfindung, bei dem sowohl der zweite Einlasskanal 3, also auch der erste Einlasskanal 2 jeweils einen Hauptkanal 7, 7', als auch einen Nebenkanal 8, 8' aufweist, wobei beide Nebenkanäle 8, 8' durch den Flachschieber 12 steuerbar sind.

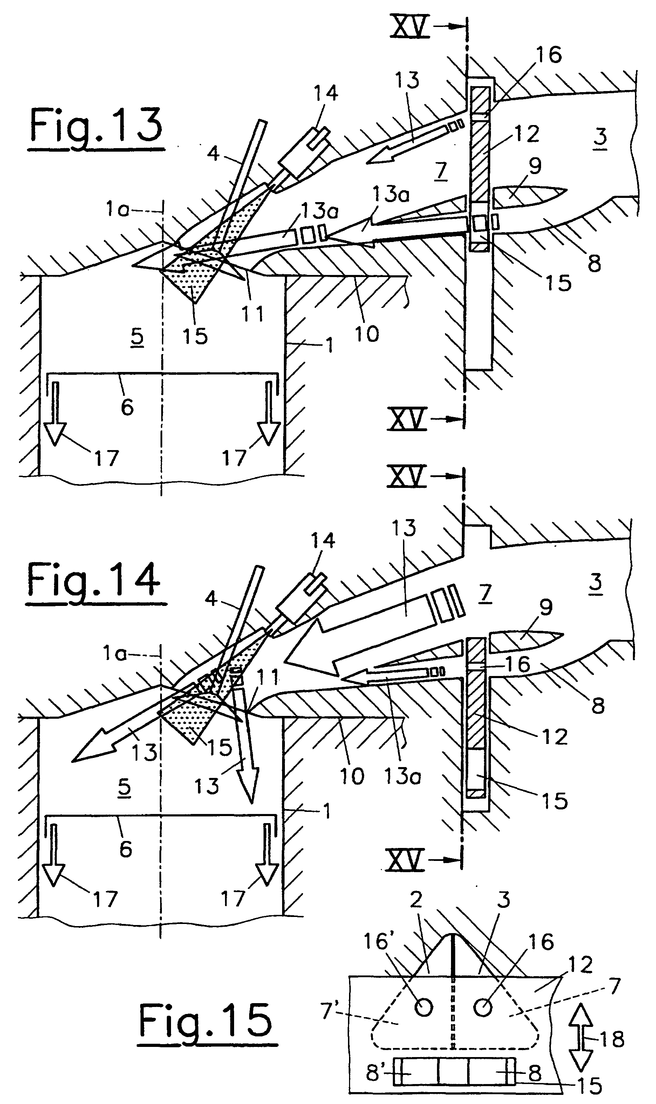

Im in den Fig. 10 bis 12 gezeichneten vierten Ausführungsbeispiel sind die Hauptkanäle 7, 7' in jeder Stellung des Flachschiebers 12 zur Gänze geöffnet. In der aus den Fig. 10 und 12 ersichtlichen ersten Stellung des Flachschiebers 12 sind auch die beiden Nebenkanäle 8, 8' geöffnet, wodurch eine Tumbleströmung im Zylinderraum 5 gemäß dem Pfeil 13a eingeleitet wird. In der zweiten Stellung des Flachschiebers 12 ist zumindest ein Nebenkanal 8, 8' gedrosselt oder gesperrt, wodurch die Strömung gemäß den Pfeilen 13 neutral bzw. mit sehr schwachem Tumble in den Zylinderraum 5 einströmt.

Im in den Fig. 13 bis 15 gezeigten fünften Ausführungsbeispiel ist der Flachschieber 12 im Wesentlichen parallel zur Zylinderachse 1a verschiebbar und steuert sowohl die Nebenkanäle 8, 8', als auch die Hauptkanäle 7, 7'. In der in den Fig. 13 und 15 dargestellten ersten Stellung des Flachschiebers 12 sind die Nebenkanäle 8', 8 des ersten Einlasskanales 2 und des zweiten Einlasskanales 3 zur Gänze durch die Steueröffnung 15 des Flachschiebers 12 geöffnet und die Hauptkanäle 7', 7 verschlossen bzw. durch die Leckageöffnungen 16', 16 stark gedrosselt. Dadurch wird eine tumblebehaftete Strömung im Zylinderraum 5 erzeugt. In der zweiten Stellung dagegen, welche in Fig. 14 angedeutet ist, sind die Hauptkanäle 7', 7 des ersten und zweiten Einlasskanales 2, 3 voll geöffnet und die Nebenkanäle 8', 8 durch die Leckageöffnungen 16', 16 gedrosselt, weshalb der Hauptdurchfluss durch die Hauptkanäle 7', 7 erfolgt und die Strömung neutral in den Zylinderraum 5 eintrifft.

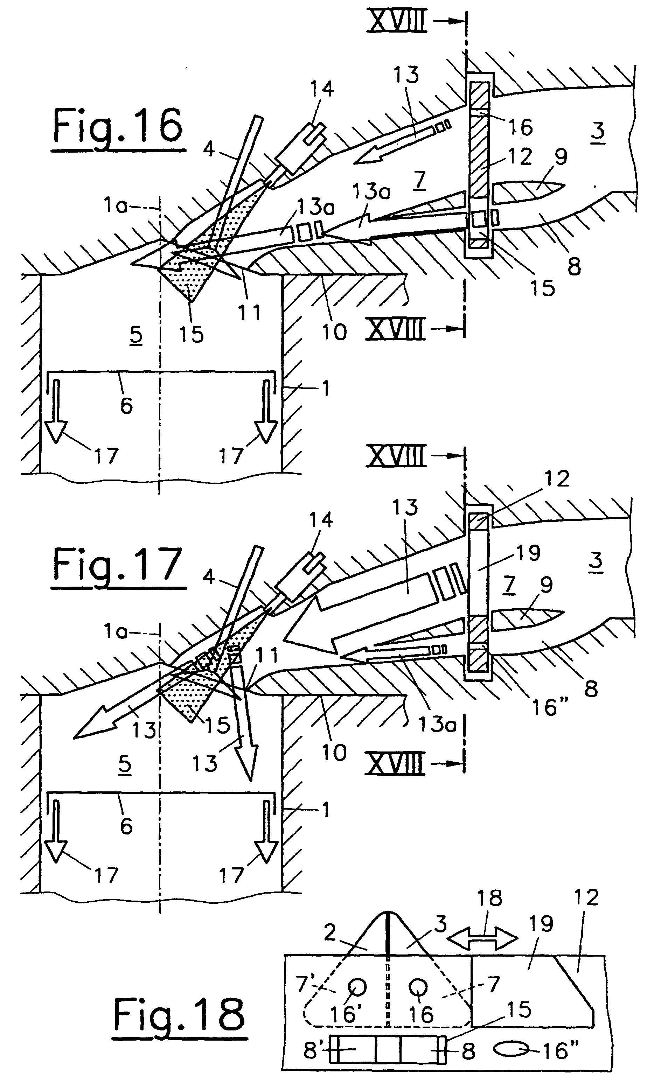

Die Fig. 16 bis 18 stellen ein sechstes Ausführungsbeispiel mit jeweils einem Nebenkanal 8', 8 pro Einlasskanal 2, 3 dar, wobei sowohl Hauptkanäle 7', 7, als auch Nebenkanäle 8', 8 durch den Flachschieber 12 angesteuert werden. Der Flachschieber 12 ist dabei in Längsrichtung der Brennkraftmaschine, also etwa parallel zur Kurbelwellenachse, verschiebbar und weist eine Steueröffnung 15 für die Nebenkanäle 8' und 8, eine Steueröffnung 19 für die beiden Hautpkanäle 7' und 7, sowie eine Leckageöffnung 16', 16 pro Einlasskanal 2, 3 auf. In der in den Fig. 16 und 18 dargestellten ersten Stellung des Flachschiebers 12 sind beide Nebenkanäle 8', 8 zur Gänze freigegeben und die Hauptkanäle 7', 7 verschlossen bzw. durch die Leckageöffnungen 16', 16 stark gedrosselt. Somit erfolgt der Hauptdurchfluss durch die Nebenkanäle 8', 8, wodurch ein starker Tumble im Zylinderraum 5 erzeugt wird. In der in Fig. 17 eingezeichneten zweiten Stellung des Flachschiebers 12 sind die beiden Hauptkanäle 7', 7 durch die Steueröffnung 19 freigegeben und die beiden Nebenkanäle 8', 8 verschlossen bzw. durch weitere Leckageöffnung 16" gedrosselt. Diese Stellung entspricht beispielsweise dem Volllastbereich, in welchem der maximale Durchfluss erwünscht ist.

Durch die erfindungsgemäß ausgebildete Kanalkonfiguration und der Umschaltung zwischen Hauptkanal 7, 7' und Nebenkanal 8, 8' mittels Flachschieber 12 kann einerseits im unteren und mittleren Lastbereich ein hoher Einlasstumble und andererseits bei Volllast eine wesentliche Erhöhung der Füllung des Zylinderraumes 5 erreicht werden.

## Patentansprüche

1. Brennkraftmaschine mit zumindest einem als Füllkanal ausgebildeten ersten Einlasskanal (2) und zumindest einem als Füllungskanal ausgebildeten zweiten Einlasskanal (3) pro Zylinder (1), wobei zumindest ein Einlasskanal (2, 3), vorzugsweise der zweite Einlasskanal (3) einen Hauptkanal (7, 7') und einen Nebenkanal (8, 8') aufweist, welche durch eine Kanalzwischenwand (9, 9') voneinander getrennt sind und welche sich stromabwärts der Kanalzwischenwand (9, 9') vereinigen, wobei quer zum zweiten Einlasskanal (3) ein Flachschieber (12) angeordnet ist, welcher in einer ersten Stellung den Durchfluss durch den Nebenkanal (8) freigibt und in einer zweiten Stellung den Durchfluss durch den Nebenkanal (8) zumindest drosselt und den Durchfluss durch den Hauptkanal (7) ermöglicht, **dadurch gekennzeichnet, dass** der Nebenkanal (8, 8') stromaufwärts des Flachschiebers vom Hauptkanal (7, 7') abzweigt und wieder in diesen einmündet.

2. Brennkraftmaschine nach Anspruch 1, **dadurch gekennzeichnet, dass** die Kanalzwischenwand (9, 9') einstückig mit dem Zylinderkopf ausgeführt ist.

3. Brennkraftmaschine nach Anspruch 1 oder 2, **dadurch gekennzeichnet, dass** der Nebenkanal (8, 8') zwischen Hauptkanal (7, 7') und Zylinderkopfebene (10) im Zylinderkopf angeordnet ist.

4. Brennkraftmaschine nach einem der Ansprüche 1 bis 3, **dadurch gekennzeichnet, dass** der Nebenkanal (8, 8') so drall- und/oder tumbleerzeugend ausgebildet ist, dass er in der ersten Stellung des Flachschiebers (12) einen Drall und/oder Tumble im Zylinderraum (5) erzeugt.

5. Brennkraftmaschine nach Anspruche 4, **dadurch gekennzeichnet, dass** der Nebenkanal (8, 8') als eine Tangentialströmung im Brennraum (5) erzeugender Kanal, vorzugsweise als Tangentialkanal ausgebildet ist.

6. Brennkraftmaschine nach einem der Ansprüche 1 bis 5, **dadurch gekennzeichnet, dass** der Flachschieber (12) auch quer zum ersten Einlasskanal (2) angeordnet ist und der Durchflussquerschnitt des ersten Einlasskanales (2) durch den Flachschieber (12) gleichzeitig mit dem Durchfluss und/oder dem Drall des zweiten Einlasskanales (3) steuerbar ist.

7. Brennkraftmaschine nach Anspruch 6, **dadurch gekennzeichnet, dass** erster und zweiter Einlasskanal (2, 3) als tumbleerzeugende Kanäle ausgebildet sind, und dass durch gleichzeitiges Schalten der beiden Einlasskanäle (2, 3) durch den Flachschieber (12) die Tumble-Strömung variierbar ist.

8. Brennkraftmaschine nach Anspruch 6 oder 7, **dadurch gekennzeichnet, dass** der Flachschieber (12) in der ersten Stellung den Durchfluss durch den ersten Einlasskanal (2) zumindest drosselt.

9. Brennkraftmaschine nach einem der Ansprüche 6 bis 8, **dadurch gekennzeichnet, dass** auch der erste Einlasskanal (2) einen Hauptkanal (7') und einen Nebenkanal (8') aufweist, welche durch eine Kanalzwischenwand (9') voneinander getrennt sind, wobei der Nebenkanal (8') vom Hauptkanal (7') abzweigt und wieder in diesen einmündet.

10. Brennkraftmaschine nach Anspruch 9, **dadurch gekennzeichnet, dass** der Flachschieber (12) in seiner ersten Stellung den Durchfluss durch den Nebenkanal (8') des ersten Einlasskanales (2) freigibt und in seiner zweiten Stellung den Durchfluss durch den Nebenkanal (8') zumindest drosselt und den Durchfluss durch den Hauptkanal (7') ermöglicht.

11. Brennkraftmaschine nach einem der Ansprüche 1 bis 10, **dadurch gekennzeichnet, dass** der Flachschieber (12) in der ersten Stellung den Durchfluss durch den Hauptkanal (7, 7') zumindest drosselt.

12. Brennkraftmaschine nach einem der Ansprüche 1 bis 11, **dadurch gekennzeichnet, dass** der Flachschieber (12) in einer dritten Stellung den Durchfluss durch den Nebenkanal (8, 8') zumindest drosselt.

13. Brennkraftmaschine nach einem der Ansprüche 1 bis 12, **dadurch gekennzeichnet, dass** der Flachschieber (12) in einer dritten Stellung den Durchfluss durch den Hauptkanal (7, 7') ermöglicht.

14. Brennkraftmaschine nach Anspruch 12 oder 13, **dadurch gekennzeichnet, dass** der Flachschieber (12) in der dritten Stellung den Durchfluss durch den ersten Einlasskanal (2) zumindest drosselt.

15. Brennkraftmaschine nach einem der Ansprüche 1 bis 10 oder 11 bis 14, **dadurch gekennzeichnet, dass** der Flachschieber (12) in jeder Stellung den Durchfluss durch den Hauptkanal (7, 7') ermöglicht.

16. Brennkraftmaschine nach einem der Ansprüche 1 bis 15, **dadurch gekennzeichnet, dass** der Flachschieber (12) etwa parallel zur Kurt elwellenachse verschiebbar ist.

17. Brennkraftmaschine nach einem der Ansprüche 1 bis 15, **dadurch gekennzeichnet, dass** der Flachschieber (12) tangential bezüglich der Kurbelwelle, vorzugsweise parallel zur Zylinderachse (1a) verschiebbar ist.

18. Brennkraftmaschine nach einem der Ansprüche 1 bis 17, **dadurch gekennzeichnet, dass** in zumindest einen Einlasskanal (2, 3), vorzugsweise sowohl in den ersten, als auch in den zweiten Einlasskanal (2, 3), eine Einspritzeinrichtung (14) einmündet, wobei vorzugsweise die Einmündung der Einspritzeinrichtung (14) stromabwärts der Einmündung des Nebenkanales (8, 8') in den Hauptkanal (7, 7') angeordnet ist.

19. Brennkraftmaschine nach einem der Ansprüche 1 bis 18, **dadurch gekennzeichnet, dass** der Flachschieber (12) zumindest eine Leckag eöffnung (16, 16', 16") aufweist, um im geschlossenen Hauptkanal (7, 7') und/oder im geschlossenen Nebenkanal (8, 8') eine vordefinierte Leckageströmung zu ermöglichen.

## Claims

1. Internal combustion engine where each cylinder (1) is provided with at least one first inlet port (2) configured as a charging port and at least one second inlet port (3) configured as a charging port, at least one of said inlet ports (2, 3), and preferentially the second one (3), comprising a primary passage (7, 7') and a secondary passage (8, 8'), which are separated by a partition wall (9, 9') and are united downstream of said partition wall (9, 9'), a flat slide (12) being positioned transversely to the second inlet port (3), which slide (12) will open the flow through the secondary passage (8) in a first position and at least throttle the flow through the secondary passage (8) in a second position while permitting the flow to pass through the primary passage (7), **characterized in that** the secondary passage (8, 8') branches off the primary passage (7, 7') upstream of the flat slide (12) before joining it again.

2. Internal combustion engine according to claim 1, **characterized in that** the partition wall (9, 9') is configured integral with the cylinder head.

3. Internal combustion engine according to claim 1 or 2, **characterized in that** the secondary passage (8, 8') is located between the primary passage (7, 7') and the cylinder head plane (10) in the cylinder head.

4. Internal combustion engine according to any of claims 1 to 3, **characterized in that** the secondary passage (8, 8') has swirl- or tumble-generating properties such that in the first position of the flat slide (12) it will produce a swirl and/or tumble in the combustion chamber (5).

5. Internal combustion engine according to claim 4, **characterized in that** the secondary passage (8, 8') is configured as a passage generating a tangential flow in the combustion chamber (5), i.e. preferentially as a tangential passage.

6. Internal combustion engine according to any of claims 1 to 5, **characterized in that** the flat slide (12) is in a position that is also transverse to the first inlet port (2), and that the flow cross-section of the first inlet port (2) can be controlled by the flat slide (12) simultaneously with the flow and/or swirl of the second inlet port (3).

7. Internal combustion engine according to claim 6, **characterized in that** the first and second inlet port (2, 3) are configured as tumble-generating passages, and that the tumble flow can be varied by simultaneously controlling the two inlet ports (2, 3) by means of the flat slide (12).

8. Internal combustion engine according to claim 6 or 7, **characterized in that** the flat slide (12) in its first position will at least throttle the flow through the first inlet port (2).

9. Internal combustion engine according to any of claims 6 to 8, **characterized in that** the first inlet port (2) also comprises a primary passage (7') and a secondary passage (8') which are separated by a partition wall (9'), the secondary passage (8') branching off the primary passage (7') before joining it again.

10. Internal combustion engine according to claim 9, **characterized in that** the flat slide (12) in its first position will release the flow through the secondary passage (8') of the first inlet port (2), and in its second position will at least throttle the flow through the secondary passage (8') and enable the flow to pass through the primary passage (7').

11. Internal combustion engine according to any of claims 1 to 10, **characterized in that** the flat slide (12) in its first position will at least throttle the flow through the primary passage (7, 7').

12. Internal combustion engine according to any of claims 1 to 11, **characterized in that** the flat slide (12) in a third position will at least throttle the flow through the secondary passage (8, 8').

13. Internal combustion engine according to any of claims 1 to 12, **characterized in that** the flat slide (12) in a third position will enable the flow to pass through the primary passage (7, 7').

14. Internal combustion engine according to claim 12 or 13, **characterized in that** the flat slide (12) in its third position will at least throttle the flow through the first inlet port (2).

15. Internal combustion engine according to any of claims 1 to 10 or 11 to 14, **characterized in that** the flat slide (12) in each position will enable the flow to pass through the primary passage (7, 7').

16. Internal combustion engine according to any of claims 1 to 15, **characterized in that** the flat slide (12) can be shifted approximately parallel with the crankshaft axis.

17. Internal combustion engine according to any of claims 1 to 15, **characterized in that** the flat slide (12) can be shifted tangentially relative to the crankshaft, preferentially parallel to the cylinder axis (1a).

18. Internal combustion engine according to any of claims 1 to 17, **characterized in that** an injection unit (14) opens into at least one inlet port (2, 3), and preferentially into both the first and second inlet port (2, 3), the nozzle of said injection unit (14) being preferentially positioned downstream of the point where the secondary passage (8, 8') opens into the primary passage (7, 7').

19. Internal combustion engine according to any of claims 1 to 18, **characterized in that** the flat slide (12) has at least one leakage opening (16, 16', 16") in order to permit a predefined leakage flow in the closed primary passage (7, 7') and/or in the closed secondary passage (8, 8').

## Revendications

1. Moteur à combustion interne comportant par cylindre (1), au moins un premier canal d'admission (2) comme canal de remplissage et au moins un second canal d'admission (3) comme canal de charge au moins un canal d'admission (2, 3), de préférence le second canal d'admission (3), ayant un canal principal (7, 7') et un canal auxiliaire (8, 8') séparés par une cloison de canal (9, 9') et se réunissant en aval de cette cloison (9, 9'),
avec transversalement au second canal d'admission (3) un tiroir plat (12) qui, dans une première position, libère le passage à travers le canal auxiliaire (8) et dans une seconde position, au moins étrangle le passage dans le canal auxiliaire (8) et permet le passage à travers le canal principal (7),
**caractérisé en ce que**
le canal auxiliaire (8, 8') dérive du canal principal (7, 7') en amont du tiroir plat et rejoint de nouveau celui-ci.

2. Moteur à combustion interne selon la revendication 1,
**caractérisé en ce que**
la cloison intermédiaire (9, 9') entre les canaux fait corps avec la culasse de cylindre.

3. Moteur à combustion interne selon la revendication 1 ou 2,
**caractérisé en ce que**
le canal auxiliaire (8, 8') est installé dans la culasse de cylindre entre le canal principal (7, 7') et le plan joint (10) de culasse.

4. Moteur à combustion interne selon la revendication 1 ou 2,
**caractérisé en ce que**
le canal auxiliaire (8, 8') est réalisé tourbillonnaire et/ou turbulent pour générer un écoulement tourbillonnant et/ou turbulent dans la chambre de cylindre (5) lorsque le tiroir plat (12) est dans sa première position.

5. Moteur à combustion interne selon la revendication 4,
**caractérisé en ce que**
le canal auxiliaire (8, 8') est réalisé sous la forme d'un canal générant un écoulement tangentiel dans la chambre de combustion (5), de préférence comme canal tangentiel.

6. Moteur à combustion interne selon l'une des revendications 1 à 5,
**caractérisé en ce que**
le tiroir plat (12) est installé transversalement au premier canal d'admission (2) et la section de passage du premier canal d'admission (2) est commandée par le tiroir plat (12) en même temps que le débit et/ou la rotation du second canal d'admission (3).

7. Moteur à combustion interne selon l'une des revendications 1 à 5,
**caractérisé en ce que**
le premier et le second canal d'admission (2, 3) sont réalisés sous 1a forme de canaux générant de la turbulence, et la commutation simultanée des deux canaux d'admission (2, 3) par le tiroir plat (12) modifie l'écoulement turbulent.

8. Moteur à combustion interne selon les revendications 6 ou 7,
**caractérisé en ce que**
dans sa première position, le tiroir plat (12) étrangle le passage à travers le premier canal d'admission (2).

9. Moteur à combustion interne selon l'une des revendications 6 à 8,
**caractérisé en ce que**
le premier canal d'admission (2) comporte également un canal principal (7') et un canal auxiliaire (8') séparés par une cloison de canal (9'), le canal auxiliaire (8') dérivant du canal principal (7') pour redéboucher dans celui-ci.

10. Moteur à combustion interne selon la revendication 9,
**caractérisé en ce que**
dans sa première position le tiroir plat (12) libère le passage à travers le canal auxiliaire (8') du premier canal d'admission (2) et dans sa seconde position il permet le passage au moins étranglé à travers le canal auxiliaire (8') et le passage à travers le canal principal (7').

11. Moteur à combustion interne selon l'une des revendications 1 à 10,
**caractérisé en ce que**
dans sa première position, le tiroir plat (12) étrangle au moins le passage à travers le canal principal (7, 7').

12. Moteur à combustion interne selon l'une des revendications 1 à 11,
**caractérisé en ce que**
dans une troisième position, le tiroir plat (12) assure au moins l'étranglement du passage à travers le canal auxiliaire (8, 8').

13. Moteur à combustion interne selon l'une des revendications 1 à 12,
**caractérisé en ce que**
dans une troisième position, le tiroir plat (12) permet le passage à travers le canal principal (7, 7').

14. Moteur à combustion interne selon l'une des revendications 12 ou 13,
**caractérisé en ce que**
dans la troisième position, le tiroir plat (12) étrangle au moins le passage à travers le premier canal d'admission (2).

15. Moteur à combustion interne selon l'une des revendications 1 à 10 ou 11 à 14,
**caractérisé en ce que**
dans chaque position, le tiroir plat (12) permet le passage à travers 1e canal principal (7, 7').

16. Moteur à combustion interne selon l'une des revendications 1 à 15,
**caractérisé en ce que**
le tiroir plat (12) coulisse sensiblement parallèlement à l'axe du vilebrequin.

17. Moteur à combustion interne selon l'une des revendications 1 à 15,
**caractérisé en ce que**
le tiroir plat (12) est coulissant tangentiellement par rapport au vilebrequin, de préférence parallèlement à l'axe (la) du cylindre.

18. Moteur à combustion interne selon l'une des revendications 1 à 17,
**caractérisé en ce que**
dans au moins un canal d'admission (2, 3), de préférence toutefois dans le premier, et aussi dans le second canal d'admission (2, 3), débouche une installation d'injection (14) et de préférence l'embouchure de l'installation d'injection (14) se situe en aval de l'embouchure du canal auxiliaire (8, 8') dans le canal principal (7, 7').

19. Moteur à combustion interne selon l'une des revendications 1 à 18,
**caractérisé en ce que**
le tiroir plat (12) comporte au moins un orifice de fuite (16, 16', 16") pour permettre un écoulement de fuite prédéfini lorsque 1e canal principal (7, 7') et/ou le canal auxiliaire (8, 8') sont fermés.
